# EUROPEAN PATENT APPLICATION

(11) **EP 4 748 693 A1**
(43) Date of publication of application: **27.05.2026**
(21) Application number: 24214600.9
(22) Date of filing: 21.11.2024
(51) Int. Cl.: B62J 43/28, B62K 19/40, B62J 43/13, B62M 6/90

(54) **BATTERY FIXING DEVICE OF BICYCLE**

(71) Applicant: CG Solution (BVI) Co Ltd, Taichung City 407604 (TW)
(72) Inventor: Chen, Han-Chieh, New Taipei City 221037 (TW)
(74) Representative: Cabinet Chaillot

(57) **Abstract**

The present invention relates to a battery fixing device (1) of a bicycle, wherein a pivot mechanism (10) is used to pivotally connect a frame tube (3) having a built-in battery and a battery (2). The frame tube (3) is located at the two opposite side walls (30, 31) on the two sides of the pivot mechanism (10) and respectively configured with a side opening (300, 310) at a position corresponding to a front end (20) and a rear end (21) of the battery (2) in diagonal interlaced arrangement. Therefore, the battery (2) rotates laterally with the pivot mechanism (10) as an axle core so the battery (2) can slide out from one of the two side openings (300, 310) for replacement. Moreover, due to the diagonal interlaced arrangement of the two side openings (300, 310) and the short bore diameters of the side openings (300, 310), the hoop stress and rigidity of the frame tube (30) will not be destroyed.

## Description

### BACKGROUND OF THE INVENTION

The present invention relates to a battery fixing device of bicycle, and more particularly to a battery fixing device of bicycle which enables the battery to be rotated in a lateral direction and slide out for replacement and meanwhile maintain the integrity, the hoop structure strength (i.e., hoop stress) and rigidity of the frame tube with built-in battery.

### DESCRIPTION OF THE RELATED ART

Accordingly, for the purpose of aesthetic, the prior battery fixing device of bicycle is mostly built in the frame tube of the bicycle and the down tube is the maximum. The fixing manner of the down tube with built-in battery is in some cases, to install an opening larger than the outer diameter of the end part of the battery on the bottom end of the down tube and to remove the battery in a manner of pulling downward, and in other cases, to install a lateral opening longer than the length of the battery at the side end or bottom end or top end of the down tube and to remove the battery in lateral direction. To install an opening larger than the outer diameter of battery at the bottom end of the down tube or install a lateral opening longer than the length of battery at the side end or top end or bottom end of the down tube is not only destroying the integrity of the down tube but also destroying the hoop structure strength and rigidity of the down tube.

In view of the above-mentioned shortcoming of the prior-art battery fixing device for bicycle in actual application, the inventor of the present invention improved the design and developed the present invention.

### SUMMARY OF THE INVENTION

Accordingly, it is a main object of the present invention to provide a battery fixing device of bicycle which enables a battery to rotate in a lateral direction and slide out for replacement and not destroy the hoop structure strength (i.e., hoop stress) and rigidity of a frame tube.

The main feature of the present invention is to provide a pivot structure for pivoting between the frame tube having a built-in battery and the battery. The frame tube is installed at the two opposite side walls of the frame tube on the two sides of the pivot structure and a side opening is respectively configured on a position corresponding to a front end and a rear end of the battery in a manner of diagonal interlaced arrangement, and thereby the battery rotates laterally with the pivot mechanism as an axle core to enable the battery to slide out from one of the two side openings for replacement. Moreover, the diagonal interlaced arrangement and the short bore diameters of the side openings enable the hoop stress and rigidity of the frame tube no to be destroyed.

The battery fixing device of the present invention comprises: a pivot mechanism configured outside the frame tube for pivotally connecting the battery and the frame tube, positioning the battery and enabling the battery to rotate laterally with the pivot mechanism as an axle core; and, the frame tube located at the two opposite side walls of the two sides of the pivot mechanism, the two opposite side walls located at a position corresponding to a front end and a rear end of the battery and respectively configured with a side opening in a manner of diagonal interlaced arrangement, the lengths of the two side openings being capable of satisfying the front end and the rear end of the battery to be exposed outside the frame tube through the two side while the battery rotating laterally with the pivot mechanism as the axle core.

The technical means for accomplishing the above-mentioned objects and effects of the invention are described with respect to the following embodiment.

### BRIEF DESCRIPTION OF THE DRAWINGS

Fig. 1 is a structural view of an embodiment of the present invention showing the battery installed at one of the frame tubes of the bicycle.
Fig. 2 is an exploded view of an embodiment of the present invention showing the battery installed at one of the frame tubes of the bicycle.
Fig. 3 is a longitudinal section side view of Fig. 1.
Fig. 4 is a transverse section top view of Fig. 1.
Fig. 5 is a section top view of an embodiment of the present invention showing the rotation of the battery in the lateral direction for replacement.

### DETAILED DESCRIPTION OF EMBODIMENTS OF THE INVENTION

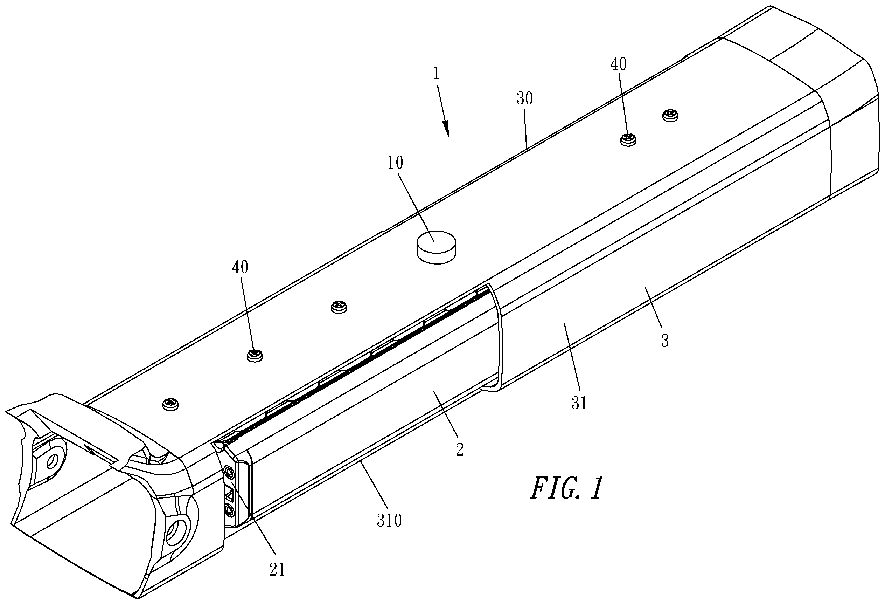

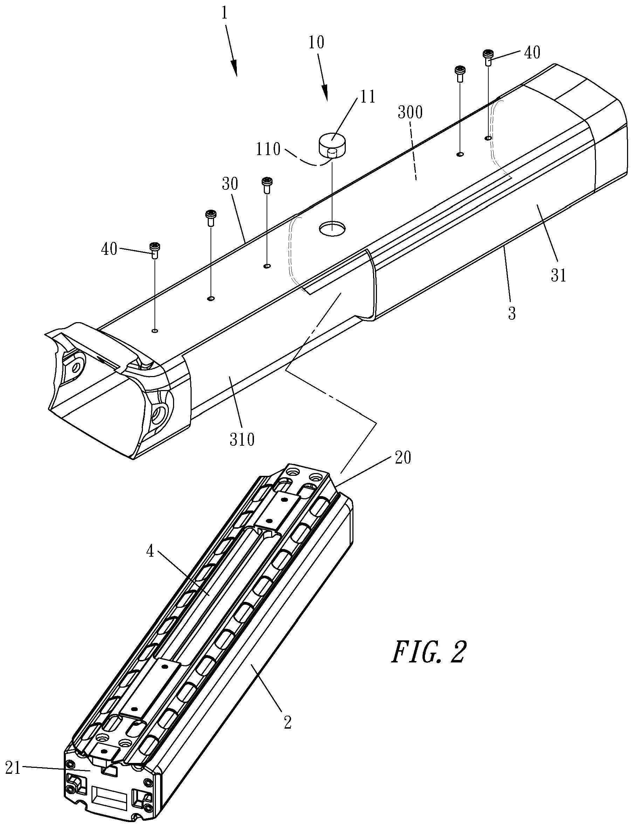

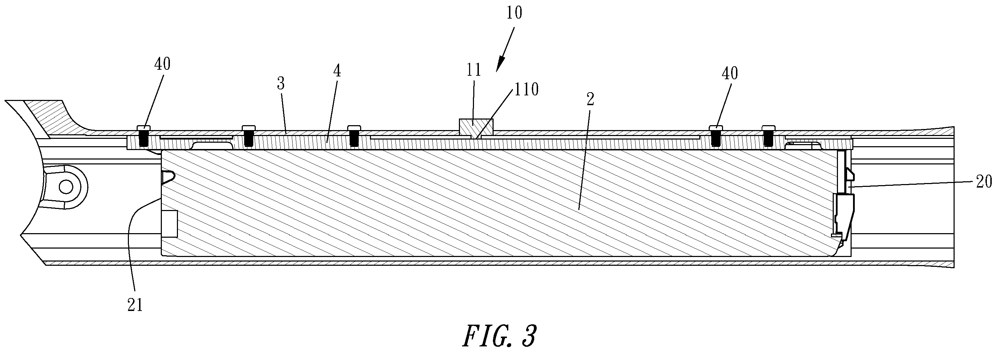

Referring to Figs. 1~4, a battery fixing device 1 of a bicycle has a battery 2 built in one of the frame tubes 3 of a bicycle frame and the frame tubes 3 can be a down tube of the bicycle. The battery fixing device 1 comprises a pivot mechanism 10 installed at the frame tube 3 and on a middle position of an outer wall corresponding to the battery 2 to pivotally joint the battery 2 and the frame tube 3 and position the battery 2 to further enable the battery 2 to rotate in the lateral direction with the pivot mechanism 10 as an axle core. The pivot mechanism 10 can be a structure which penetrates into a rotating bolt 11 from an outer side of the frame tube 3 to enter into the frame tube 3 and an end part 110 (as shown in Figs. 2, 3) of the rotating bolt 11 resists against a middle portion of the outer wall of the battery 2 via an axial stress to achieve the pivotal rotation of the battery 2.

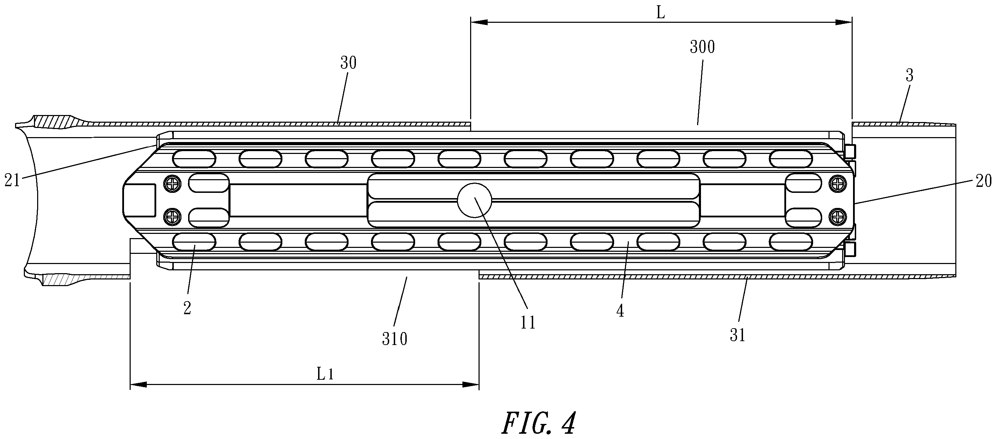

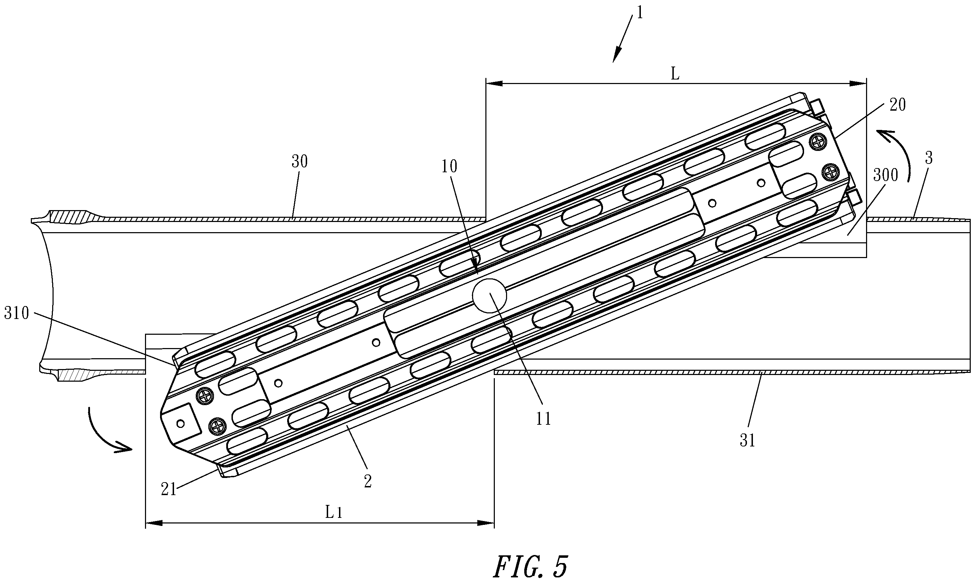

The side openings 300, 310 are respectively provided in a manner of diagonal interlaced arrangement at the two corresponding left side wall 30 and right side wall 31 on the two sides of the pivot mechanism (as shown in Figs. 2, 4), wherein the two opposite left side wall 30 and right side wall 31 are at a position corresponding to a front end 20 and a rear end 21 of the battery 2. The lengths L, L1 of the two side openings 300, 310 (as shown in Figs. 4, 5) can satisfy a front end 20 and a rear end 21 of the battery 2 to be exposed outside the frame tube 3 (as shown in Fig. 5) when the battery 2 rotates in the lateral direction to the limit (for example, rotates 20 degrees) with the pivot mechanism 10 as an axle core.

After combining the above-mentioned mechanism sequentially, loosening the rotating bolt 11 of the pivot mechanism10 to enable the battery 2 to rotate laterally toward the ends of the side openings 300, 310 with the rotating bolt 11 as the axle as shown in Fig. 5 is to replace the battery 2. When the battery 2 rotates the limit, the front end 20 and the rear end 21 of the battery 2 are exposed outside the frame tube 3 (as shown in Fig. 5), and then via an axial force, the battery 2 can be pulled out from one of the two side openings 300, 310 to leave the frame tube for replacing the battery 2.

Secondly, the battery 2 is fixed inside the frame tube 3, wherein a fixing frame 4 can be fixed inside the frame tube 3 via a screw piece 4 and the fixing frame 4 is further combined with the battery 2 to fix the battery 2 inside the frame tube 3 (as shown in Fig. 3). The present invention does not limit the type of the battery 2 being fixed inside the frame tube 3. When rotating the battery 2 in the lateral direction, the screw piece 40 can be loosened in advance, and then loosening the rotating bolt 11 of the pivot mechanism 10 to enable the battery 2 to rotate laterally with the rotating bolt 11 as the axle core.

The above-mentioned two side openings 300, 310 are configured at two opposite sides of the frame tube 3 in a manner of diagonal interlaced arrangement and provide the battery 2 to be rotated laterally for replacement and also, the bore diameters of the two side openings 300, 310 are smaller than the prior art lateral opening longer than the length of the battery configured on the side end, top end or bottom end of the down tube, and therefore the hoop stress and rigidity of the frame tube 3 will not be destroyed. This is a functional enhancement to facilitate application and the structure is novel and unprecedented.

To summarize, the present invention not only features novelty, but also has good added value for industrial application. Therefore, an application for patent is proposed. Your inspection and approval will be highly appreciated.

## Claims

1. A battery fixing device (1) of a bicycle, wherein a battery (2) is built inside a frame tube (3) of the bicycle, the battery fixing device (1) comprising:
a pivot mechanism (10) configured outside the frame tube (3) for pivotally connecting the battery (2) and the frame tube (3), positioning the battery (2) and enabling the battery (2) to rotate laterally with the pivot mechanism (10) as an axle core; and,
the frame tube (3) located at the two opposite side walls (30, 31) of the two sides of the pivot mechanism (10), the two opposite side walls (30, 31) located at a position corresponding to a front end (20) and a rear end (21) of the battery (2) and respectively configured with a side opening (300, 310) in a manner of diagonal interlaced arrangement, the lengths (L, L1) of the two side openings (200, 310) being capable of satisfying the front end (20) and the rear end (21) of the battery (2) to be exposed outside the frame tube (3) through the two side openings (300, 310) while the battery (2) rotating laterally with the pivot mechanism (10) as the axle core.

2. The battery fixing device (1) of the bicycle of claim 1, wherein the pivot mechanism (10) penetrates into a rotating bolt (11) from the outside of the frame tube (3) to enter into the frame tube (3) and an end part (110) of the rotating bolt (11) resists against an outer wall of a middle position of the battery (2) via a axial stress.

3. The battery fixing device (1) of the bicycle of claim 1, wherein the lengths (L, L1) of the two side openings (300, 310) enables the front end (20) and the rear end (21) of the battery (2) to be exposed outside the frame tube (3) when the battery (2) rotates laterally in 20 degrees.

4. The battery fixing device (1) of the bicycle of claim 1, wherein the battery (2) is fixed inside the frame tube (3) by using a fixing frame (4) to fix inside the frame tube (3) via a screw piece (40), and the fixing frame (4) is further combined with the battery (2).

5. The battery fixing device (1) of the bicycle of any one of claims 1 to 4, wherein the frame tube (3) is a down tube of a bicycle frame.
